# EUROPÄISCHE PATENTSCHRIFT

(11) **EP 2 083 191 B1**
(45) Veröffentlichungstag und Bekanntmachung des Hinweises auf die Patenterteilung: **20.04.2011**
(21) Anmeldenummer: 09000592.7
(22) Anmeldetag: 16.01.2009
(51) Int. Cl.: F16F 1/373

(54) **Lager**
Bearing
Palier

(30) Priorität: 22.01.2008 DE 102008005577
(43) Veröffentlichungstag der Anmeldung: 29.07.2009
(73) Patentinhaber: Carl Freudenberg KG, 69469 Weinheim (DE)
(72) Erfinder: Erl, Andreas, 16761 Henningsdorf (DE); Hinze, Andreas, 14621 Schönwalde-Glien (DE)

(56) Entgegenhaltungen:
- BE-A- 468 902
- BE-A- 484 612
- DE-U- 1 950 035
- GB-A- 924 136

## Beschreibung

### Technisches Gebiet

Die Erfindung betrifft ein Lager, umfassend einen Kern mit einer Bohrung auf dem außenumfangsseitig ein Elastomerkörper kraft- und/oder formschlüssig angeordnet ist

### Stand der Technik

Derartige Lager werden als elastische Verbindungselemente, insbesondere zur Lagerung von Aggregaten und Nebenaggregate beispielsweise von Pumpen, Kompressoren, Kühlem eingesetzt Durch den Elastomerkörper erfolgt neben der Stützfunktion auch eine schwingungstechnische Isolierung oder Dämpfung des zu lagernden Maschinenelementes. Die bekannten Lager sind meist recht einfach aufgebaut und bestehen aus einem rohrförmigen Kern an den außenumfangsseitig ein Elastomerkörper anvulkanisiert ist. Kern und Elastomerkörper sind also stoffschlüssig miteinander verbunden. Der Elastomerkörper ist zweiteilig ausgebildet und weist an beiden Stirnseiten einen Bund auf, die eine Klemmnut begrenzen. In dieser Klemmnut wird das Maschinenelement angeordnet und durch eine Schraubverbindung verspannt.

Ein gattungsbildendes Lager ist z.B. aus dem Dokument BE 484 612 A bekannt.

### Darstellung der Erfindung

Der Erfindung liegt die Aufgabe zugrunde, ein Lager bereitzustellen, welches besonders einfach an den jeweiligen Einsatzzweck anpassbar ist und welches kostengünstig herstellbar ist.

Diese Aufgabe wird mit einem Lager nach Anspruch 1 gelöst.

Zur Lösung der Aufgabe ist der Elastomerkörper außenumfangsseitig zumindest partiell konisch ausgebildet Dabei ist der Elastomerkörper explizit nicht stoffschlüssig mit dem Kern verbunden, wie es der Fall wäre, wenn der Elastomerkörper an den Kern anvulkanisiert würde. Der Elastomerkörper und der Kern bilden separate Bauelemente, deren Eigenschaften durch Werkstoffwahl und geometrische Ausgestaltung besonders einfach an den jeweiligen Anwendungsfall angepasst werden kann. Durch das ausschließliche kraft- und /oder formschlüssige Verbinden ist es möglich, dass Elastomerkörper und Kern erst unmittelbar vor der Montage ausgewählt und gefügt werden. Aufgrund der Konizität ergibt sich in Fügerichtung erst bei Volumenüberdeckung des konischen Teils des Elastomerkörpers mit dem ebenfalls konischen Abschnitt der Bohrung des zu lagernden Teils ein zunehmender Widerstand gegen weiteres Fügen. Damit kann sich bei kraftüberwachtem Fügen des Lagers ein erkennbarer Kraftanstiegunterschied ergeben. Dies lässt sich vorteilhaft für eine automatische Montagestrecke ausnutzen. Aber auch bei Fügen von Hand kann sich daraus ein Vorteil für die Reproduzierbarkeit ergeben.

Der Kern kann an einer Stirnseite einen Bund aufweisen. Der Bund bildet eine Begrenzung an der sich das zu lagernde Maschinenelement nach der Montage abstützt. Da der Kern aus einem robusten Material, vorzugsweise einem Metall besteht, ist der Bund ebenfalls sehr robust und das Lager kann hohe Axialkräfte aufnehmen.

Der Kern kann rotationssymmetrisch, insbesondere zylinderförmig ausgebildet sein. Rotationssymmetrische Kerne sind besonders einfach herstellbar und besonders einfach, beispielsweise mittels einer Schraubverbindung zu montieren. Des Weiteren ergeben sich gleichmäßige Lagereigenschaften, so dass bei der Montage nicht auf eine bestimmte Einbaulage geachtet werden muss. Der Kern kann außenumfangsseitig zumindest ein Formelement aufweisen. Das Formelement kann als umlaufende Nut oder Erhebung oder aus einer Kombination aus Nut und Erhebung bestehen. Vorzugsweise weist der Elastomerkörper innenumfangsseitig kongruente Formelemente auf, so dass der Elastomerkörper sicher auf dem Kern gehalten ist. Bei dieser Ausgestaltung ist der Elastomerkörper zunächst formschlüssig auf dem Kern gehalten und kann je nach Ausgestaltung der Geometrie der beiden Elemente zusätzlich kraftschlüssig auf dem Kern fixiert werden.

Der Kern kann zumindest partiell konisch gestaltet sein. Vorzugsweise ist der Kern in dem Bereich konische ausgebildet, in dem auch der auf dem Kern montierte Elastomerkörper konisch ausgebildet ist. Durch die Kombination eines konisch ausgebildeten Kerns mit einem am Außenumfang und an dem Kern zugewandten Innenumfang konisch ausgebildeten Elastomerkörper ergibt sich eine Federgeometrie, die sich an eine Konusfedergeometrie anlehnt. Diese Gestaltung ermöglicht eine gezielte Einstellung der axialen zur radialen Steifigkeit, was für die Optimierung der Lagerung einer Komponente vorteilhaft ist.

An den konischen Bereich des Elastomerkörpers kann sich in Fügerichtung ein zylindrischer Bereich anschließen. Dieser kann beim Fügen in die Aufnahmebohrung des zu lagernden Teils die Aufnahmebohrung volumetrisch überdecken. Der zylindrische Abschnitt des Elastomerkörpers kann von unterschiedlicher Länge im Verhältnis zur Länge des konischen Abschnitts sein. Die gestufte Gestaltung der Länge des Elastomerkörpers ist für die Montage vorteilhaft, da nach Abschluss des Fügens des zylindrischen Abschnitts bereits ein Selbsthalt durch Kraftschluss des Lagers in der Auf nahmebohrung des zu lagernden Teils stattfinden kann. In Abhängigkeit des Verhältnisses der Längen der beiden aneinander anschließenden konischen und zylindrischen Abschnitte in Fügerichtung kann sich bei kardanischer Auslenkung eine unterschiedliche Steifigkeit ergeben. Gleichzeitig werden über die Gestaltung der beiden Abschnitte die radiale und die axiale Steifigkeit eingestellt.

Für die gezielte Einstellung der axialen Steifigkeit ist es vorteilhaft, den Elastomerbund zu strukturieren, wobei die Strukturierung mindestens auf der Seite erfolgt, welche dem Bund des Kerns abgewandt ist. Die Strukturierung kann durch eine Anzahl über den Umfang verteilt angeordnete Erhebungen, Ausnehmungen oder ähnliche Profilierungen gebildet sein. Diese Strukturierung beeinflusst neben dem Material des Elastomerkörpers die Steifigkeit in axialer Richtung, wobei sich aus der Strukturierung eine Reduzierung der axialen Steifigkeit und eine Modifizierung der Kennlinie ergeben.

Im Bereich des Konus oder benachbart zu dem Konus kann sich eine Vertiefung befinden. Vorzugsweise befindet sich dann am Elastomerkörper ein kongruentes Formelement. Hierbei ist vorteilhaft, dass erst nach einem vorgegebenen Montageweg des Elastomerkörpers auf den Kern ein größerer Montagewiderstand wirksam ist. Durch die nach Montage ineinander greifenden Formelemente ist ein für die Hand- und auch für die automatisierte Fertigung leicht detektierbare reproduzierbare Montageposition möglich.

Der Elastomerkörper weist außenumfangsseitig in axialer Richtung verlaufende Nuten auf. Beim Fügen des Lagers mit dem zu lagernden Maschinenelement kann Material des Elastomerkörpers in die Nuten verdrängt werden. Dadurch wird einerseits die Montage vereinfacht und durch die Rückstellkraft des in die Nuten verdrängten Materials ergibt sich eine gute Schwingungsentkopptung bei hoher Flächenpressung.

Der Elastomerkörper kann außenumfangsseitig weitere Formelemente aufweisen. Die Formelemente sind vorzugsweise so gestaltet, dass sie entgegen der Fügerichtung wirken. Dazu können die Formelemente beispielsweise als umlaufende dreieckförmige Vorsprünge ausgebildet sein, wobei eine senkrecht verlaufende Wand entgegen der Fügerichtung ausgerichtet ist Diese können sich in Fügerichtung an das zylindrische Element des Elastomerkörpers anschließen. Es kann vom zylindrischen Teil durch eine umlaufende Nut abgegrenzt sein. Bereits das Fügen dieses Formelements, welches stets dem zylindrischen Abschnitt der aufnehmenden Bohrung des zu lagernden Teils, zumindest partiell, volumetrisch überdeckend gestaltet ist, kann zum Selbsthalt des Lagers in der aufnehmenden Bohrung führen.

Nach Überdeckung infolge Fügens ergibt sich ein entgegen der Fügerichtung höherer Bewegungswiderstand gegenüber dem in Fügerichtung. Dies kann durch die Überdeckung und die Detailgestaltung des dreieckförmigen Elements noch verstärkt werden.

Der Elastomerkörper kann an einer Stirnseite einen Elastomerbund aufweisen. Der Elastomerbund ist vorzugsweise kongruent zu dem Bund des Kerns ausgebildet. Der Elastomerbund ermöglicht eine schwingungsentkoppelnde Lagerung in axialer Wirkrichtung. Insgesamt ergibt sich die Steifigkeit des Lagers in axialer, radialer und kardanischer Richtung durch die Abschnitte des Elastomerkörpers, welche bei Relativbewegung zwischen dem Kern und der zu lagernden Komponente mindestens zeitweise deformiert werden. Die Deformation gegen den Verformungswiderstand des Elastomers ist dabei entscheidend.

In einer erfindungsgemäßen Lageranordnung sind zwei erfindungsgemäße Lager spiegelbildlich zueinander angeordnet und das zu lagernde Maschinenelement ist zwischen den beiden Lagern angeordnet. Dazu weisen beide Lager vorzugsweise einen Bund an Kern und Elastomerkörper auf, so dass das zu lagernde Maschinenelement in radialer und axialer Richtung sicher geführt ist.

### Kurzbeschreibung der Zeichnung

Einige Ausführungsbeispiele des erfindungsgemäßen Lagers werden nachfolgend anhand der Figuren näher erläutert. Diese zeigen, jeweils schematisch:
Fig. 1 ein Lager im Längsschnitt;
Fig. 2 ein Lager in räumlicher Darstellung;
Fig. 3 ein Lager mit Kern ohne Hinterschnitt im Längsschnitt;
Fig. 4 eine Lageranordnung im Längsschnitt.

### Ausführung der Erfindung

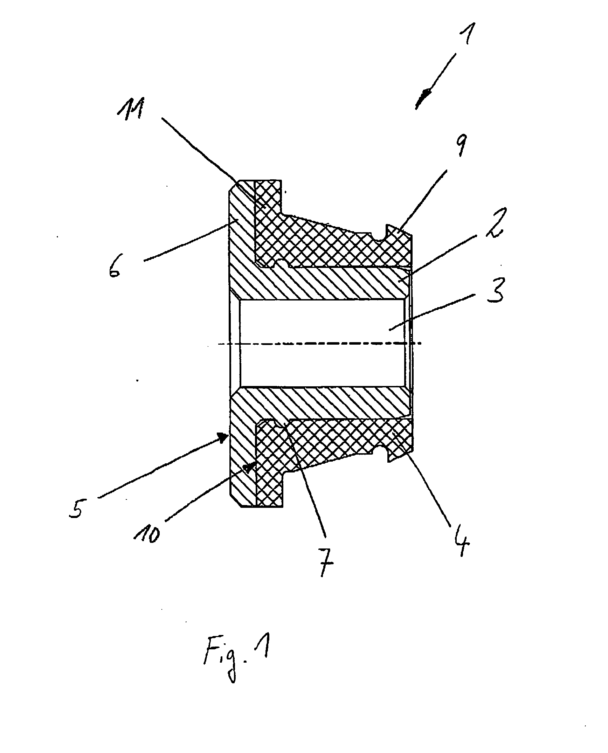

Figur 1 zeigt ein Lager 1, bestehend aus einem zylinderförmigen metallischen Kern 2 mit einer zentrisch angeordneten Bohrung 3. Außenumfangsseitig auf dem Kern ist ein Elastomerkörper 4 kraft- und formschlüssig befestigt. Dazu weist der Kem 2 außenumfangsseitig ein Formelement 7 in Form einer umlaufenden Erhebung auf. Der Elastomerkörper 4 wird separat erzeugt und ist nicht stoffschlüssig mit dem Kem 2 verbunden. Der Kern 2 sowie der Elastomerkörper 4 weisen an ihren Stirnseiten 5, 10 jeweils einen Bund 6,11 auf, um das zu lagernde Maschinenelement 13 in axialer Richtung abzustützen. Der Elastomerkörper ist außenumfangsseitig partiell konisch ausgebildet, wobei die Wandstärke des Elastomerkörpers 4 in Richtung des Bundes 10 zunimmt. Zusätzlich weist der Elastomerkörper 4 außenumfangsseitig mehrere über dem Umfang verteilt angeordnete und in axialer Richtung verlaufende Nuten 8 auf. Des Weiteren weist der Elastomerkörper 4 ebenfalls außenumfangsseitig an seinem freien Ende ein weiteres Formelemente 9 in Form einer umlaufen dreieckförmigen Erhebung auf, wobei das weitere Formelement 9 in Richtung des Bundes 10 ansteigend ausgebildet ist und an der dem Bund 10 zugewandten Seite einen Hinterschnitt bildet.

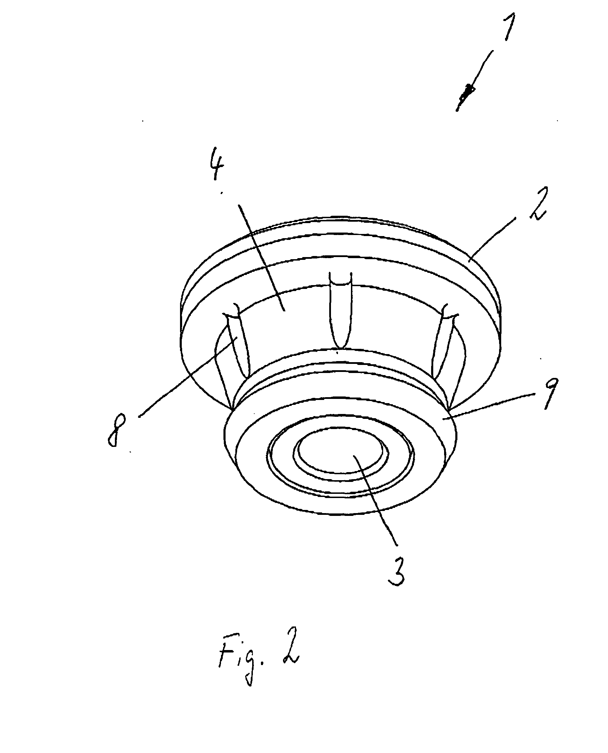

Figur 2 zeigt ein Lager 1 gemäß Figur 1 in räumlicher Darstellung.

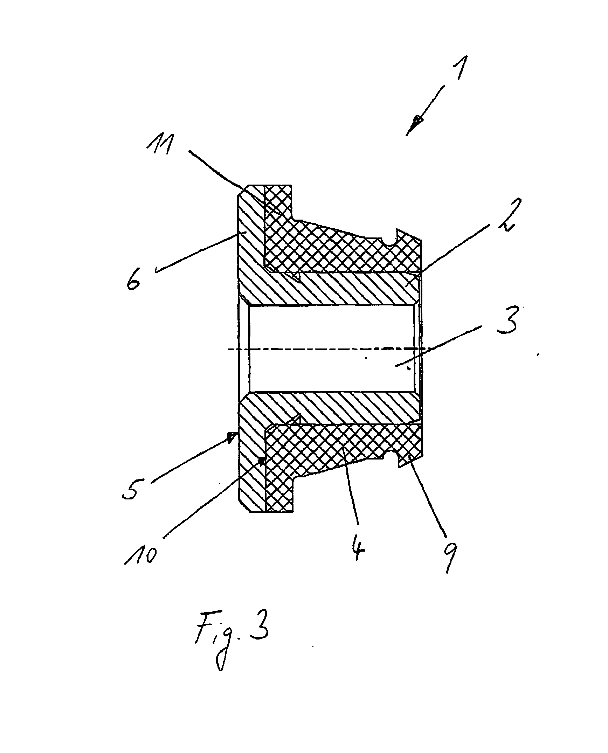

Figur 3 zeigt ein Lager 1 gemäß Figur 1, wobei der Kern 2 in dieser Ausgestaltung außenumfangsseitig glatt, das heißt ohne Formelement 7 ausgebildet ist. Der Elastomerkörper 4 ist in dieser Ausführung vorwiegend kraftschlüssig auf dem Kern 2 gehalten.

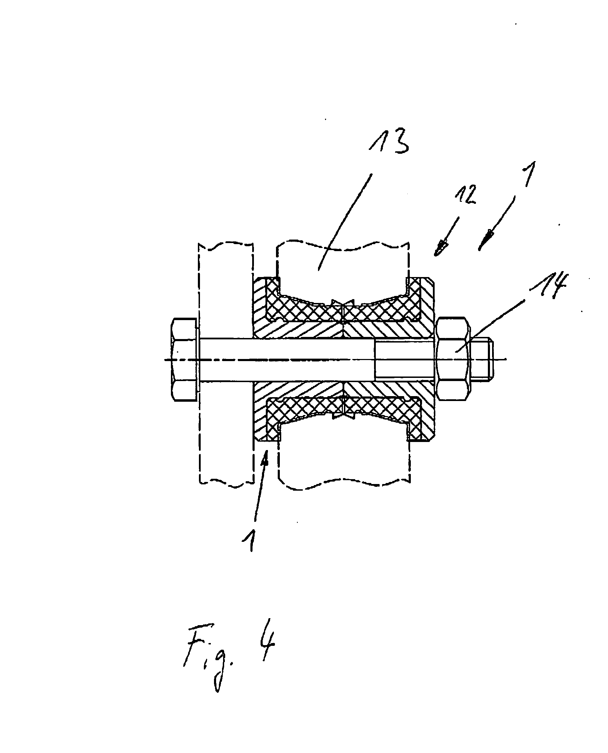

Figur 4 zeigt eine Lageranordnung 12, umfassend zwei Lager 1 nach einer der vorherigen Figuren. Die Lager 1 sind spiegelbildlich zueinander angeordnet und das zu lagernde Maschinenelement 13 ist zwischen den beiden Lagern 1 angeordnet. Die Lager 1 werden durch eine Schraubverbindung 14 fixiert, die in den Bohrungen 3 angeordnet ist.

## Patentansprüche

1. Lager (1), umfassend einen Kern (2) mit einer Bohrung (3) auf dem außenumfangsseitig ein Elastomerkörper (4) kraft- und/oder formschlüssig angeordnet ist, wobei der Elastomerkörper (4) außenumfangsseitig zumindest partiell konisch ausgebildet ist, **dadurch gekennzeichnet, dass** der Elastomerkörper (4) außenumfangsseitig in axialer Richtung verlaufende Nuten (8) aufweist.

## Claims

1. Bearing (1), comprising a core (2) with a bore (3), on which core an elastomeric body (4) is arranged non-positively and/or positively on the outer circumference, the elastomeric body (4) being of at least partially conical form on the outer circumference, **characterized in that** the elastomeric body (4) has on the outer circumference grooves (8) which run in the axial direction.

## Revendications

1. Palier (1), comprenant un noyau (2) avec un alésage (3), sur lequel noyau est disposé du côté périphérique externe un corps élastomère (4) par engagement par force et/ou par coopération de forme, le corps élastomère (4) étant réalisé sous forme au moins partiellement conique sur son côté périphérique externe, **caractérisé en ce que** le corps élastomère (4) présente des rainures (8) s'étendant dans la direction axiale sur son côté périphérique externe.
